# EUROPÄISCHE PATENTANMELDUNG

(11) **EP 1 128 084 A2**
(43) Veröffentlichungstag der Anmeldung: **29.08.2001**
(21) Anmeldenummer: 01102167.2
(22) Anmeldetag: 02.02.2001
(51) Int. Cl.: F16D 65/12

(54) **Verfahren zur Herstellung einer Bremsscheibe**

(30) Priorität: 23.02.2000 DE 10008191
(71) Anmelder: Bayerische Motoren Werke Aktiengesellschaft, 80809 München (DE)
(72) Erfinder: Spörer, Josef, Dr., 84072 Reichertshausen (DE); Stimpel, Herbert, 82008 Unterhaching (DE); Götz, Josef, 84160 Frontenhausen (DE); Kirmse, Stefan, 82541 Münsing (DE); Blechinger, Gerd, 81927 München (DE)

(57) **Zusammenfassung**

Bei einem neuen Verfahren zur Herstellung einer Bremsscheibe (1) für ein Kraftfahrzeug wird der Bremsscheibentopf (3) mit dem Reibring (2) durch elektromagnetisches Umformen verbunden.

## Beschreibung

Die Erfindung betrifft ein Verfahren zur Herstellung einer Bremsscheibe nach dem Oberbegriff des Anspruchs 1.

Bekannte Bremsscheiben werden aus einem Gusswerkstoff in einem Herstellschritt gegossen. Durch das einheitliche Material von Reibring und Bremsscheibentopf ergibt sich ein vergleichsweise hohes Gewicht der Bremsscheibe.

Bei Bremsscheiben, deren Bremsscheibentopf aus einem anderen Material als der üblicherweise aus Grauguss gefertigte Reibring besteht, sind verschiedene Techniken bekannt. Zum einen gibt es "gebaute" Bremsscheiben, bei denen Reibring und Bremsscheibentopf über separate Bauelemente, wie Stifte, Schrauben etc. zusammengefügt sind. Durch den Montageaufwand entstehen zusätzliche Kosten. Auch können sich Klappergeräusche einstellen, ebenso wie Spiel bei Drehrichtungsumkehr und Korrosion an den Fügestellen. Des weiteren kann der Reibring aus Grauguss mit einem Bremsscheibentopf aus einem anderen Material verschweißt werden. Dieses Verfahren ist allerdings nur bei einer eingeschränkten Zahl von Materialpaarungen anwendbar, wobei beispielsweise der häufig für Reibringe verwendete Gusswerkstoff GG-15 wegen der Aufhärtung und Versprödung der Schweissnaht nicht geeignet ist. Darüber hinaus ist es bekannt, einen Bremsscheibentopf aus einer Legierung mit einem Schmelzpunkt, der tiefer liegt als der Schmelzpunkt der Legierung des Reibringes, im Verbundguss mit dem Reibring zusammenzufügen.

Aufgabe der Erfindung ist es, ein einfaches und kostengünstiges Verfahren zur Herstellung einer Bremsscheibe bereitzustellen.

Diese Aufgabe wird durch die Merkmale des Anspruchs 1 gelöst.

Mit dem elektromagnetischen Umformverfahren können Reibringe und Bremsscheibentöpfe unterschiedlicher Materialien miteinander verbunden werden, wobei mit der so erreichten Verbindung zwischen Reibring und Bremsscheibentopf hohe Bremsmomente übertragen werden können.

Vorteilhafte Ausgestaltungen der Erfindung sind Gegenstand der Unteransprüche.

Ein mögliches Ausführungsbeispiel der Erfindung ist in der Zeichnung dargestellt und wird nachfolgend näher erläutert. Es zeigt:
- Fig. 1: eine erfindungsgemäß hergestellte Bremsscheibe in der Seitenansicht,
- Fig. 2: eine Darstellung des Gegenstands von Fig. 1 entlang der Schnittverlaufslinie II-II in Fig. 1,
- Fig. 3: eine vergrößerte Schnittdarstellung entlang der Schnittverlaufslinie III-III in Fig. 1,
- Fig. 4: eine Seitenansicht auf den Reibring der erfindungsgemäß hergestellten Bremsscheibe,
- Fig. 5: eine Schnittdarstellung durch ein weiteres Ausführungsbeispiel eines Bremsscheibentopfes einer erfindungsgemäß hergestellten Bremsscheibe und
- Fig. 6: eine schematische Teildarstellung eines Verbindungselementes zwischen Reibring und Bremsscheibentopf eines weiteren Ausführungsbeispiels der Erfindung.

Eine in ihrer Gesamtheit mit 1 bezeichnete Bremsscheibe besteht aus einem Reibring 2 und einem Bremsscheibentopf 3. Der Reibring 2 ist innenbelüftet und setzt sich aus einem äußeren sowie einem inneren Reibringabschnitt 4 bzw. 5 zusammen, die über Stege 6 miteinander verbunden sind. Der Bremsscheibentopf 3 weist einen Boden 7 sowie eine umlaufende Wand 8 auf, deren fahrzeuginnenseitiger Endabschnitt 9 mit dem äußeren Abschnitt 4 des Reibringes 2 verbunden ist.

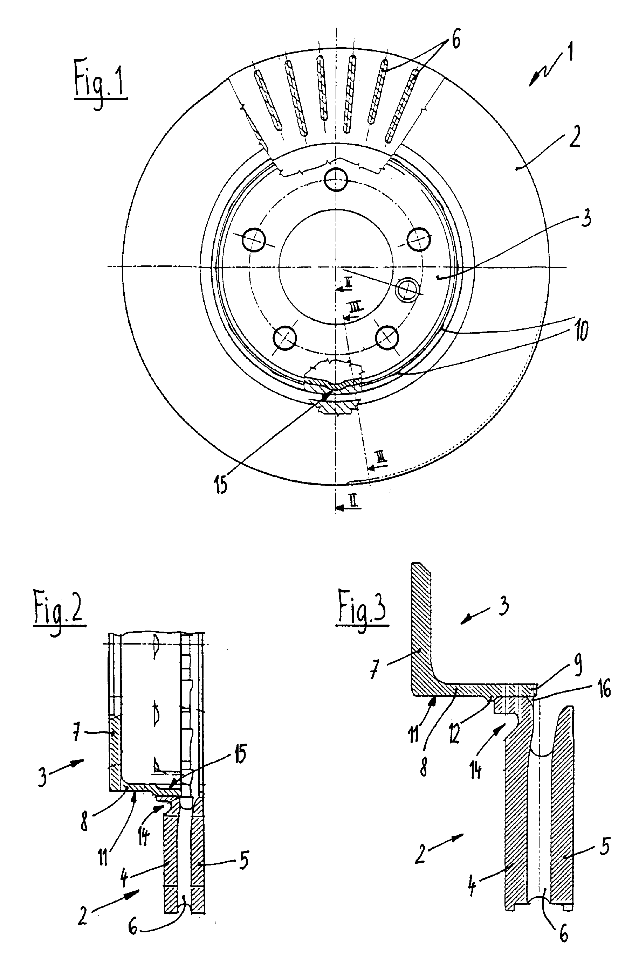

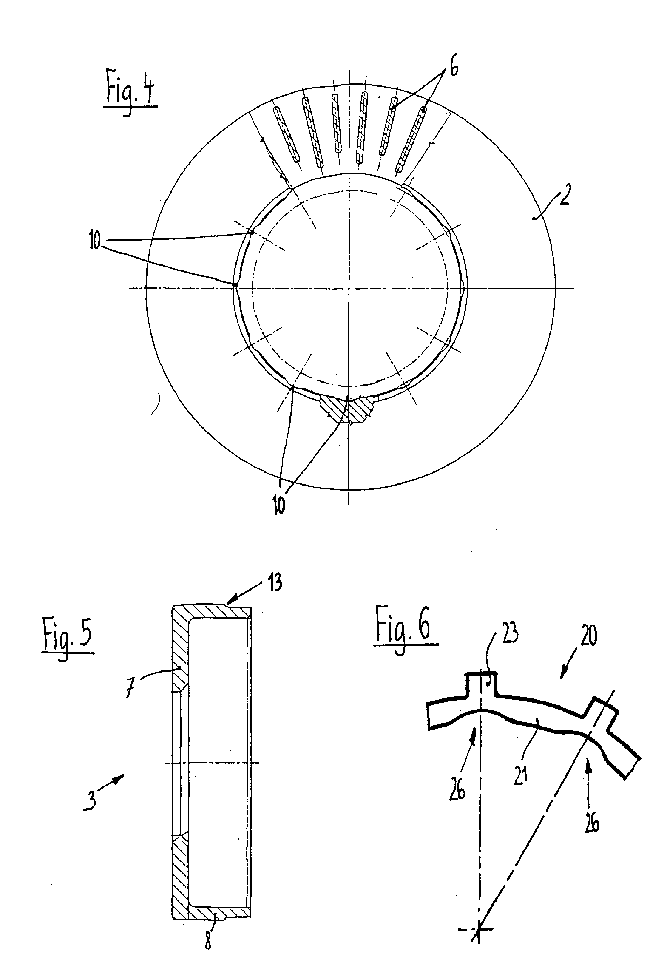

Wie insbesondere aus den Fig. 1 und 4 hervorgeht, weist der äußere Abschnitt 4 des Reibrings 2 am Umfang verteilt eine Mehrzahl kreissegmentartiger Vertiefungen 10 auf. An der Außenseite 11 der Wand 8 des Bremsscheibentopfes 3 ist partiell oder umlaufend ein Anschlag 12 (Fig. 3) bzw. ein als Anschlag wirkender Absatz 13 (Fig. 5) vorgesehen. Der radial innenliegende Bereich 14 des topfseitigen Abschnittes 4 des Reibringes 2 ist als Anlagefläche zur Verbindung mit dem Bremsscheibentopf 3 ausgebildet.

Zur Herstellung der erfindungsgemäßen Bremsscheibe 1 wird der Reibring 2 auf den Bremsscheibentopf 3 aufgeschoben, bis der Endabschnitt 14 des äußeren Reibringabschnittes 4 am Anschlag 12 bzw. dem Absatz 13 axial zur Anlage kommt. Anschließend wird ein Elektromagnet in Form einer zylindrischen Spule, deren Außendurchmesser geringfügig kleiner ist als der Innendurchmesser des Bremsscheibentopfes 3, in das Innere des Bremsscheibentopfes 3 eingeführt. Der elektromagnetische Umformprozeß wird durch kurzzeitiges Anlegen eines elektrischen Stromes hoher Stärke an die Spule ausgelöst. Hierdurch wird in der Spule impulsartig ein Magnetfeld erzeugt, das durch Wechselwirkung mit dem Bremsscheibentopf 3 in diesem einen hohen elektrischen Strom induziert, der wiederum ein Magnetfeld erzeugt, das so gerichtet ist, dass eine schlagartige Kaltumformung der Wand 8 des Bremsscheibentopfes 3 radial nach außen erfolgt. Das Verfahren an sich ist beispielsweise in der Druckschrift Robert N. Stauffer, Electromagnetic Metal Forming, Manufacturing Engineering, Februar 1978, Seiten 74 bis 76, beschrieben.

Durch die beschriebene Kaltumformung werden diejenigen Abschnitte der Wand 8 des Bremsscheibentopfes 3, die an eine Vertiefung 10 angrenzen, in die Vertiefung 10 hineingedrückt, wie aus Fig. 1 und der Schnittdarstellung der Fig. 2 ersichtlich. Der Verformungsbereich der Wand 8 ist mit der Bezugszahl 15 bezeichnet. Durch das Eingreifen des Verformungsbereiches 15 des Bremsscheibentopfes 3 in die Vertiefung 10 des Reibringes 2 wird eine formschlüssige Verbindung zwischen den beiden Teilen 2 und 3 der Bremsscheibe 1 hergestellt, durch die Kräfte in Umfangsrichtung übertragen werden können. Selbstverständlich können die Vertiefungen 10 auch eine von der Kreissegmentform abweichende Gestalt aufweisen.

Die Fixierung des Reibringes 2 auf dem Bremsscheibentopf 3 in einer ersten Axialrichtung erfolgt durch den Anschlag 12 bzw. den Absatz 13. Zur Fixierung in der zweiten Axialrichtung kann der Endabschnitt 9 der Wand 8 des Bremsscheibentopfes 3 radial nach außen abgebogen werden (nicht dargestellt). Dies wird beispielsweise durch einen in Fig. 3 dargestellten Freiraum 16 im Bereich des Endabschnittes 14 des äußeren Reibringabschnittes 4 erleichtert. Der Freiraum 16 kann partiell oder umlaufend ausgebildet sein.

Durch das erfindungsgemäße Verfahren ist in vorteilhafter Weise eine Kombination verschiedener Materialien für den Reibring 2 einerseits und den Bremsscheibentopf 3 andererseits möglich. Bevorzugt wird der Reibring 2 aus GG-15 und der Bremsscheibentopf 3 aus einer Aluminiumlegierung hergestellt, wodurch sich für die Bremsscheibe 1 insgesamt ein geringeres Gewicht ergibt. Um in dem Bremsscheibentopf 3 eine als Trommelbremse ausgebildete Feststellbremse integrieren zu können, kann als Topfmaterial auch partikelverstärktes AI/MMC verwendet werden, das in der Regel ca. 20 bis 30 % SiC-Partikel enthält. Selbstverständlich kann der Reibring 2 auch aus anderen Materialien als GG bestehen, z. B. auch aus SiC.

Durch das erfindungsgemäße Herstellverfahren ist lediglich ein Gießvorgang erforderlich, nämlich zur Herstellung des Reibringes 2, mit Vorteilen gegenüber dem bekannten, aufwendigeren Verbundgussverfahren. Bei dem erfindungsgemäßen Verfahren können Reibring 2 und Bremsscheibentopf 3 als einfach zu bearbeitende Rohteile ausgeführt werden. Da das elektromagnetische Umformverfahren berührungslos arbeitet, ist eine Bearbeitung der Fügestellen nicht erforderlich. Die erfindungsgemäß hergestellten Bremsscheiben 1 zeichnen sich darüber hinaus durch einen geringen Wärmeübergang zwischen dem thermisch hoch beanspruchbaren Reibring 2 und dem aus einem thermisch empfindlicheren Material gebildeten Bremsscheibentopf 3 aus.

Fig. 6 betrifft ein weiteres Ausführungsbeispiel der Erfindung und zeigt einen Ausschnitt eines Verbindungselementes 20 zur Verbindung von Reibring 2 und Bremsscheibentopf 3. Das Verbindungselement 20 ist im wesentlichen ringscheibenförmig und weist einen radial innenliegenden, umlaufenden Ringabschnitt 21 sowie einem Abschnitt 22 mit zapfenförmig radial nach außen abstehenden Elementen 23 auf. Es besteht bevorzugt aus einem Blechmaterial und wird in einfacher Weise durch ein Stanzverfahren hergestellt, durch das ohne zusätzliche Bearbeitungsschritte die Endkontur des Verbindungselementes 20 erreicht wird. Das Verbindungselement 20 wird beim Gießen des Reibringes 2 mit seinen zapfenförmigen Elementen 23 in den radial innenliegenden freien Endabschnitt des äußeren Reibringabschnittes 4 mit eingegossen. Der nicht vom Gussmaterial des Reibringabschnittes 4 eingefasste radial innenliegende Ringabschnitt 21 des Verbindungselementes 20 dient als Verbindungsflansch zum Bremsscheibentopf 3.

Hierzu weist das Verbindungselement 20 an seinem Innenumfang verteilt eine Mehrzahl kreissegmentförmiger Einbuchtungen 26 auf, die den Vertiefungen 10 des Reibringes 2 des ersten Ausführungsbeispiels entsprechen. In analoger Weise erfolgt hier die Verbindung zwischen Reibring 2 und Bremsscheibentopf 3 mittelbar durch das Verbindungselement 20, indem die Verformungsbereiche 8 des Bremsscheibentopfes 3 durch elektromagnetische Umformung in die Einbuchtungen 26 gedrückt werden und hierdurch eine in Axial- und Umfangsrichtung formschlüssige Verbindung schaffen.

Zum Verfahren zur Herstellung der Verbindung zwischen Bremsscheibentopf 3 und Verbindungselement 20 wird auf die mit demselben Zeitrang eingereichte und hinsichtlich des Titels gleichlautende Patentanmeldung der Anmelderin verwiesen, deren gesamter Offenbarungsgehalt hiermit vollständig in die vorliegende Patentanmeldung einbezogen wird.

## Patentansprüche

1. Verfahren zur Herstellung einer einen Reibring und einen Bremsscheibentopf aufweisenden Bremsscheibe für ein Kraftfahrzeug,
dadurch gekennzeichnet, dass Reibring (2) und Bremsscheibentopf (3) durch elektromagnetisches Umformen miteinander verbunden werden.

2. Verfahren nach Anspruch 1,
dadurch gekennzeichnet, dass zur Durchführung des elektromagnetischen Umformens eine im wesentlichen zylindrische Spule zur Erzeugung eines elektromagnetischen Feldes in das Innere des Bremsscheibentopfes (3) eingebracht wird, wobei der Außendurchmesser der Spule geringfügig kleiner ist als der Innendurchmesser des Bremsscheibentopfes (3).

3. Verfahren nach Anspruch 1 und/oder 2,
dadurch gekennzeichnet, dass der Reibring (2), der an seinem radial innenliegenden, auf den Bremsscheibentopf (3) zuweisenden Bereich (14) wenigstens eine Vertiefung (10) aufweist, vor der Verbindung mit dem Bremsscheibentopf (3) auf diesen aufgeschoben wird und durch das elektromagnetische Umformen derjenige Bereich (15) des Bremsscheibentopfes (3), der benachbart zur Vertiefung (10) des Reibringes (2) ist, so in Richtung der Vertiefung (10) verformt wird, dass sich ein Formschluss zwischen Reibring (2) und Bremsscheibentopf (3) ergibt.

4. Verfahren nach einem der vorgenannten Ansprüche,
dadurch gekennzeichnet, dass nach dem Aufschieben des Reibringes (2) auf den Bremsscheibentopf (3) der freie Endabschnitt (9) des Bremsscheibentopfes (3) durch das elektromagnetische Umformen radial nach außen abgebogen wird.

5. Verfahren nach Anspruch 4,
dadurch gekennzeichnet, daß zumindest an einem Teil des Umfanges des radial innenliegenden Bereiches (14) des Reibringes (2) ein Freiraum (16) vorgesehen ist, in den Material des freien Endabschnittes (9) hineinverlagert wird.

6. Verfahren nach einem der vorgenannten Ansprüche,
dadurch gekennzeichnet, dass der Bremsscheibentopf (3) an der Außenseite (11) seiner Topfwandung (8) einen Anschlag (12, 13) aufweist und der Reibring (2) vor der Verbindung mit dem Bremsscheibentopf (3) so weit auf diesen aufgeschoben wird, bis er am Anschlag (12, 13) anliegt.

7. Verfahren nach Anspruch 1 und/oder 2,
dadurch gekennzeichnet, dass in den Reibring (2) ein Verbindungselement (20) eingegossen wird, das an seinem radial innenliegenden, auf den Bremsscheibentopf (3) zuweisenden Bereich wenigstens eine Einbuchtung (26) aufweist, wobei das Verbindungselement (20) vor der Verbindung mit dem Bremsscheibentopf (3) auf diesen aufgeschoben wird und durch das elektromagnetische Umformen derjenige Bereich (15) des Bremsscheibentopfes (3), der benachbart zur Einbuchtung (26) des Verbindungselementes (20) ist, so in Richtung der Einbuchtung (26) verformt wird, dass sich ein Formschluss zwischen Verbindungselement (20) und Bremsscheibentopf (3) ergibt.

8. Verfahren nach einem der vorgenannten Ansprüche,
dadurch gekennzeichnet, dass der Bremsscheibentopf (3) aus einem Leichtmetall oder einer Leichtmetall-Legierung und der Reibring (2) aus Grauguss besteht.
